(19) Europäisches Patentamt
European Patent Office
Office européen des brevets

(11) **EP 3 710 732 B1**

(12) **FASCICULE DE BREVET EUROPEEN**

(45) Date de publication et mention de la délivrance du brevet:
**29.06.2022 Bulletin 2022/26**

(21) Numéro de dépôt: **18800614.2**

(22) Date de dépôt: **09.11.2018**

(51) Classification Internationale des Brevets (IPC):
*F16H 63/50* (2006.01)    *F16H 61/04* (2006.01)

(52) Classification Coopérative des Brevets (CPC):
**F16H 63/502; F16H 61/0437;** F16H 2306/44;
F16H 2306/46

(86) Numéro de dépôt international:
**PCT/EP2018/080721**

(87) Numéro de publication internationale:
**WO 2019/096678 (23.05.2019 Gazette 2019/21)**

(54) **PROCÉDÉ ET SYSTÈME DE COMMANDE D'UNE TRANSMISSION AUTOMATIQUE SANS EMBRAYAGE POUR VÉHICULE AUTOMOBILE À PROPULSION HYBRIDE**

VERFAHREN UND SYSTEM ZUR STEUERUNG EINES KUPPLUNGSLOSEN AUTOMATISCHEN GETRIEBES FÜR EIN KRAFTFAHRZEUG MIT HYBRIDANTRIEB

METHOD AND SYSTEM FOR CONTROLLING A CLUTCHLESS AUTOMATIC TRANSMISSION FOR A HYBRID-PROPULSION MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2017 FR 1760740**

(43) Date de publication de la demande:
**23.09.2020 Bulletin 2020/39**

(73) Titulaires:
• **Renault s.a.s**
**92100 Boulogne Billancourt (FR)**
• **Nissan Motor Co., Ltd.**
**Yokohama-shi, Kanagawa 221-0023 (JP)**

(72) Inventeurs:
• **CHAMEROY, Adrien**
**78960 Voisins-le-Bretonneux (FR)**
• **BOUFFAUD, Francois**
**78420 Carrières sur Seine (FR)**
• **BEN-BELDI, Nesrine**
**75017 Paris (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
EP-B1- 1 370 438     FR-A1- 2 954 254
FR-A1- 3 048 047     US-A1- 2006 047 395

**Description**

La présente invention concerne le domaine du développement des stratégies de pilotage des transmissions automatiques.

Plus particulièrement, l'invention concerne les transmissions pour véhicules automobiles comprenant, d'une part, un moteur thermique d'entrainement et, d'autre part, au moins une machine électrique. De telles transmissions hybrides comprennent généralement deux arbres primaires concentriques portant chacun au moins un pignon de descente sur un arbre secondaire relié aux roues du véhicule.

L'intérêt des transmissions hybrides est de fournir deux sources d'énergies, thermique et électrique, à la chaine cinématique d'entrainement du véhicule. Les apports de couple de ces deux énergies peuvent se cumuler dans un mode dit « hybride » ou peuvent être utilisés séparément, soit dans un mode dit « thermique pur » où la machine électrique ne fournit pas de couple à la chaîne de traction, soit dans un mode dit « électrique pur », où le moteur thermique ne fournit pas de couple à la chaîne de traction.

Les transmissions hybrides permettent d'entrainer le moteur thermique à l'arrêt ou en roulage en utilisant la machine électrique comme démarreur. Les transmissions hybrides permettent également de charger les batteries du véhicule par la machine électrique fonctionnant en mode générateur.

Les documents WO 2012/131259 - A1 (Renault) et EP 2 726 757 - B1 (Renault) décrivent l'architecture d'une telle transmission hybride comprenant une ligne primaire comportant un arbre primaire plein connecté au volant d'inertie dynamique d'un moteur thermique et portant un pignon fou pouvant être connecté audit arbre plein par un premier système de couplage de type à clabots et un arbre primaire creux concentrique à l'arbre primaire plein, relié au rotor d'une machine électrique et portant un pignon fixe pouvant être connecté à l'arbre plein par le premier système de couplage.

La transmission comprend en outre un arbre secondaire portant deux pignons fous pouvant être connectés à la ligne primaire par un second système de couplage de type à clabots. L'arbre secondaire porte également un pignon fixe et un pignon de descente sur un différentiel relié aux roues motrices du véhicule.

Afin de permettre un changement de rapport de la transmission, il est nécessaire d'assurer le dé-clabotage des pignons dans toutes les conditions prévisibles. De plus, il est également important d'optimiser la durée de dé-clabotage afin de minimiser le ressenti par le conducteur et d'augmenter son agrément de conduite. Un procédé de commande d'actionneur pour désengager un clabot d'une transmission pour véhicule est connu de US2006/047395 ainsi que de FR 3 048 047. Un procédé de commande d'actionneur pour transmission hybride est de plus connu de FR 3 048 047.

On connait les documents US 6 371 879 - B1 (Hitachi) et US 5 456 647 - A (Chrysler) qui décrivent une unité de commande de transmission automatique configurée pour transmettre une force d'entrainement d'un moteur à un essieu basée sur le glissement de l'embrayage et le pilotage d'un bloc hydraulique pour assurer le glissement d'un mécanisme poulie/courroie afin d'assurer le désengagement d'un rapport et l'engagement d'un autre rapport.

Toutefois, de tels procédés de commande concernent des transmissions comprenant un embrayage et ne sont pas adaptés aux transmissions hybrides sans embrayage.

En effet, dans de telles transmissions hybrides sans embrayage, il n'y a pas de système mécanique de couplage.

L'objectif de l'invention est donc de pallier ces inconvénients et de proposer un procédé et un système de commande d'une transmission hybride dépourvue d'embrayage.

L'invention a pour objet un procédé de commande d'au moins un actionneur de boite d'une transmission pour véhicule automobile à propulsion hybride dépourvue d'embrayage et comprenant un moteur thermique et au moins une machine électrique, ladite transmission comprenant un arbre moteur relié directement ou indirectement au moteur thermique et/ou à la machine électrique, un arbre d'entrainement relié aux roues motrices du véhicule automobile, et au moins un système d'accouplement comprenant d'une part des clabots solidaires d'un pignon fou porté à rotation libre sur l'arbre d'entrainement et d'autre part des clabots solidaires d'un baladeur solidaire en rotation de l'arbre moteur, le baladeur étant configuré pour être déplacé longitudinalement selon l'axe de l'arbre d'entrainement par l'actionneur de boite afin d'engager ou désengager les clabots.

En vue de désengager les clabots, on calcule une consigne de couple moteur pour annuler le couple au clabot en appliquant le principe fondamental de la dynamique sur les clabots à désengager, on transmet au moteur ladite consigne de couple moteur calculée jusqu'à ce que le couple au clabot atteigne une valeur de seuil, à partir de laquelle on peut se permettre de désengager ledit clabot, en suivant une première pente à décroissance linéaire, on compare le couple au clabot avec la valeur de seuil ; et lorsque le couple au clabot est inférieur ou égal à la valeur de seuil, on commande l'actionneur de boite en envoyant une consigne de position pour déclencher le déplacement du baladeur afin de désengager les clabots en question en le faisant déplacer vers une position neutre.

Ainsi, le moteur est commandé pour réduire le niveau de couple qu'il fournit jusqu'à atteindre la consigne de couple moteur en suivant un profil de type à décroissance linéaire.

Avantageusement, on vérifie la position du baladeur et on maintient la transmission de la consigne de couple moteur pour annuler le couple au clabot selon une deuxième pente de gradient dynamique plus petit que le gradient dynamique de la première pente jusqu'à ce que le baladeur soit en position neutre.

Ainsi, on s'assure que le couple au clabot atteindra la valeur cible une fois que le déplacement du baladeur pour désengager le clabot soit terminé, c'est-à-dire que le couple au clabot traverse la fenêtre de dé-clabotage en un temps supérieur au temps nécessaire au déplacement du baladeur.

On commande ainsi conjointement le couple du moteur et le déplacement de l'actionneur de boite afin d'assurer pendant une durée que les efforts s'opposant au déplacement de l'actionneur de boite soient plus faibles que la capacité de déplacement dudit actionneur de boite pour permettre le désengagement des clabots.

Par exemple, la consigne de couple moteur pour annuler le couple au clabot est calculée en fonction d'une valeur cible de couple au clabot calculé de manière à obtenir une valeur de couple au clabot inférieure ou égale à la valeur de seuil.

Par exemple, la consigne de couple moteur pour annuler le couple au clabot est calculée en fonction de l'inertie radiale du rotor du moteur, du rapport de réduction entre le régime moteur et le régime des roues et de la dérivée temporelle du régime pour estimer la composante inertielle de l'effort au clabot.

On peut, par exemple, définir une valeur cible de couple au clabot inférieure à la valeur cible réelle, par exemple égale à 0 N.m, afin de s'assurer que le couple au clabot converge vers la valeur de seuil.

Selon un second aspect, l'invention concerne une transmission pour véhicule automobile à propulsion hybride comprenant un moteur thermique et au moins une machine électrique. Ladite transmission est dépourvue d'embrayage et comprend un arbre moteur relié directement ou indirectement au moteur thermique et/ou à la machine électrique, un arbre d'entrainement relié aux roues motrices du véhicule automobile, et au moins un système d'accouplement comprenant d'une part des clabots solidaires d'un pignon fou porté à rotation libre sur l'arbre d'entrainement et d'autre part des clabots solidaires d'un baladeur solidaire en rotation de l'arbre moteur, le baladeur étant configuré pour être déplacé longitudinalement selon l'axe de l'arbre d'entrainement par l'actionneur de boite afin d'engager ou désengager les clabots.

La transmission comprend une unité électronique de commande comprenant un système de commande comportant un module de calcul d'une consigne de couple moteur pour annuler le couple au clabot en appliquant le principe fondamental de la dynamique sur les clabots à désengager ; un module de transmission au moteur de ladite consigne de couple moteur calculée jusqu'à ce que le couple au clabot atteigne une valeur de seuil à partir de laquelle on peut se permettre de désengager ledit clabot en suivant une première pente à décroissance linéaire, un module de comparaison du couple au clabot avec la valeur de seuil ; et module de commande de l'actionneur de boite en envoyant une consigne de position au baladeur permettant de désengager les clabots en question en le faisant déplacer vers une position neutre, lorsque le couple au clabot est inférieur ou égal à la valeur de seuil.

Ainsi, le moteur est commandé pour réduire le niveau de couple qu'il fournit jusqu'à atteindre la consigne de couple moteur en suivant un profil de type décroissance linéaire.

Avantageusement, le système de commande comprend un module de vérification de la position du baladeur et un module de maintien de la consigne de couple moteur pour annuler le couple au clabot selon une deuxième pente de gradient dynamique plus petit que le gradient dynamique de la première pente jusqu'à ce que le baladeur soit en position neutre.

Ainsi, on s'assure que le couple au clabot atteindra la valeur cible une fois que le déplacement du baladeur pour désengager le clabot soit terminé, c'est-à-dire que le couple au clabot traverse la fenêtre de dé-clabotage en un temps supérieur au temps nécessaire au déplacement du baladeur.

Ainsi, le système de commande est configuré pour commander conjointement le couple du moteur et le déplacement de l'actionneur de boite afin d'assurer pendant une durée que les efforts s'opposant au déplacement de l'actionneur de boite soient plus faibles que la capacité de déplacement dudit actionneur de boite pour permettre le désengagement des clabots.

Selon un troisième aspect, l'invention concerne un véhicule automobile à propulsion hybride comprenant une transmission telle que décrite ci-dessus.

Par « moteur », on désigne le moteur thermique et/ou la ou les machines électriques.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 représente très schématiquement une architecture d'une transmission d'un véhicule automobile selon un mode de réalisation de l'invention ;
- la figure 2 est un graphique illustrant les consignes de couple au clabot en fonction du temps ; et
- la figure 3 représente un organigramme d'un procédé de commande de la transmission de la figure 1.

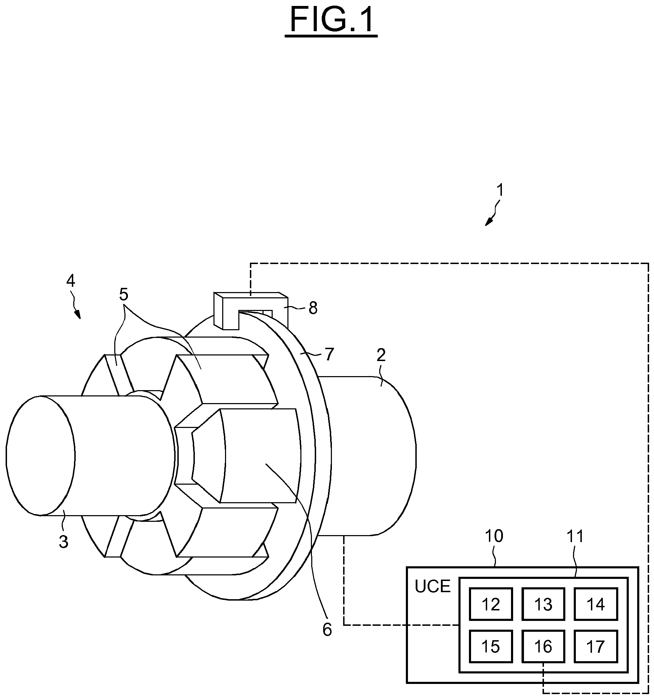

Telle qu'illustrée très schématiquement sur la figure 1, une transmission, référencée 1 dans son ensemble, est destinée à être intégrée dans un véhicule automobile à propulsion hybride (non représenté) et comprenant, d'une part un moteur thermique (non représenté) et d'autre part une ou deux machines électriques (non représentées), destinés chacun à entrainer un arbre d'entrainement des roues motrices (non représentées).

Sur la figure 1, l'architecture de la transmission 1 a été simplifiée afin de voir apparaitre un arbre moteur 2 relié au moteur thermique ou à la machine électrique ou aux deux moteurs (moteur thermique et machine électrique), et un arbre d'entrainement 3 relié aux roues motrices du véhicule automobile. Dans la suite de la description, le terme « moteur » englobera le moteur thermique ou une des machines électriques.

L'arbre d'entrainement 3 porte à rotation libre un pignon fou 4 comprenant des clabots 5 destinés à s'engager avec des clabots 6 d'un baladeur 7 solidaire de l'arbre moteur 2. Le baladeur 7 est déplacé longitudinalement selon l'axe de l'arbre d'entrainement 3 par un actionneur de boite 8.

Ce déplacement longitudinal permet d'emboiter les clabots 5, 6 afin de relier l'arbre moteur 2 aux roues motrices avec un rapport de démultiplication fixe ou de désengager les clabots 5, 6 afin de permettre la rotation libre de l'arbre moteur 2.

L'actionneur de boite 8 a des capacités limitées dues aux efforts s'opposant à son déplacement. En effet, la forme des clabots 5, 7 formant un angle crée une composante longitudinale à l'effort de réaction généré par la résultante des couples appliqués sur les arbres moteur et d'entrainement 2, 3. On retrouve également les efforts de frottement qui s'opposent au mouvement qui les crée. Ces deux efforts sont proportionnels au couple existant entre les arbres moteur et d'entrainement 2, 3.

La transmission 1 comprend une unité électronique de commande UCE 10 comprenant un système de commande 11 de la transmission configuré pour assurer un pilotage conjoint du couple moteur et de l'actionneur de boite afin d'assurer pendant une durée que les efforts s'opposant au déplacement de l'actionneur de boite soient plus faibles que la capacité de déplacement dudit actionneur de boite pour permettre le désengagement des clabots.

Le couple existant entre les arbres moteur et d'entrainement correspond à la résultante de l'effort appliqué par le couple moteur et de l'effort inertiel. L'effort inertiel résulte de la différence entre le régime de l'arbre moteur et le régime des roues motrices lorsque les clabots sont engagés.

En appliquant le principe fondamental de la dynamique sur le clabot à désengager, on obtient l'équation suivante :

$$C_m - C_r = C_c$$

Avec :

$C_m$, le couple moteur correspondant au couple réalisé par le moteur thermique ou la machine électrique ou par la combinaison des moteurs, ramené au niveau du clabot à désengager via le ratio de démultiplication du rapport à engager ;

$C_r$, le couple aux roues remonté au niveau du clabot à désengager via la chaine de démultiplication ; et

$C_c$, le couple au clabot.

Le système 11 comprend un module 12 de calcul d'une consigne de couple moteur $C_{m\_cons}$ pour annuler le couple au clabot :

$$C_{m\_cons} = C_{c\_cible} + I_m . r^2 \dot{\omega}_r \qquad \qquad Eq.1$$

Avec :

$C_{m\_cons}$ , la consigne de couple moteur ;

$I_m$, l'inertie radiale du rotor du moteur ;

$r$, le rapport de réduction entre le régime moteur et le régime des roues ; et

$\dot{\omega}_r$, la dérivée temporelle du régime pour estimer la composante inertielle de l'effort au clabot ; et

$C_{c\_cible}$ , une valeur cible de couple au clabot ; cette valeur cible de couple au clabot est calculée de manière à obtenir une valeur de couple au clabot $C_c$ inférieure à une valeur de seuil $C_{S1}$ à partir de laquelle on peut se permettre de désengager ledit clabot. Cette valeur cible de couple au clabot est par la suite exprimée au moteur au travers des rapports de réduction.

Le système 11 comprend en outre un module 13 de transmission au moteur de la consigne de couple moteur $C_{m\_cons}$ pour annuler le couple au clabot $C_c$.

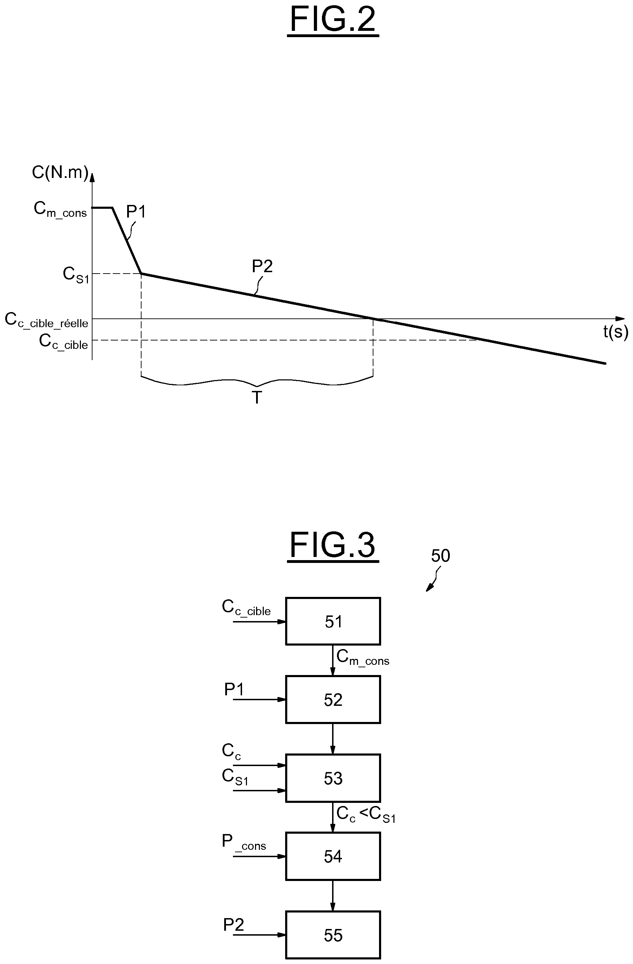

Ainsi, le moteur est commandé pour réduire le niveau de couple qu'il fournit jusqu'à atteindre la valeur de seuil $C_{S1}$ en suivant un profil de type à décroissance linéaire, selon une première pente P1 illustrée sur la figure 2. La figure 2 représente un graphique illustrant les consignes de couple au clabot en fonction du temps. En ordonnées, on retrouve le couple, exprimé en N.m et en abscisses, on retrouve le temps, exprimé en s.

A titre d'exemple nullement limitatif, en prenant un couple au clabot initial de, par exemple, 60N.m, on cherche à faire converger le couple au clabot $C_c$ vers une valeur de seuil $C_{S1}$, par exemple 5 N.m, à partir de laquelle on considère que le couple au clabot $C_c$ est suffisamment faible pour autoriser le pilotage de l'actionneur en vue du désengagement du baladeur. Pour cela, on calcule une consigne de couple moteur $C_{m\_cons}$ pour annuler le couple au clabot, puis on transmet, à chaque instant t, une consigne de couple au moteur selon une première pente P1 à décroissance linéaire, afin de faire converger progressivement le couple au clabot $C_c$ vers la valeur de seuil $C_{S1}$.

Cependant, de par les phénomènes physiques non maitrisés qui peuvent avoir lieu, tel que par exemple, un retard de réponse d'un moteur, l'estimation de la composante inertielle de l'effort au clabot, ainsi que la fidélité de réalisation de la consigne de couple moteur est entachée d'incertitude.

Pour surmonter cela, on définit une valeur cible de couple au clabot $C_{c\_cible}$, par exemple égale à -5N.m, c'est-à-dire inférieure à la valeur cible réelle $C_{c\_cible\_réelle}$ qui est de 0N.m, afin de s'assurer que le couple au clabot $C_c$ est inférieur ou égal à la valeur de seuil $C_{S1}$.

Le système 11 comprend en outre un module 14 de comparaison du couple au clabot $C_c$ avec la valeur de seuil $C_{S1}$ configuré pour vérifier si le couple au clabot $C_c$ est inférieur ou égal à la valeur de seuil $C_{S1}$, et un module de commande 15 de l'actionneur de boite en envoyant une consigne de position $P_{\_cons}$ au baladeur 7 permettant de désengager le clabot en question en le faisant déplacer vers une position Neutre, une fois que le couple au clabot $C_c$ est inférieur ou égal à la valeur de seuil $C_{S1}$.

Toutefois, l'actionneur de boite a besoin d'un certain temps pour réaliser le déplacement du baladeur et désengager le clabot. Il existe un risque que le couple au clabot traverse la fenêtre de dé-clabotage en un temps inférieur au temps T nécessaire au déplacement du baladeur. En d'autres termes, si on continue à faire converger le couple au clabot $C_c$ vers la valeur cible de couple au clabot $C_{c\_cible}$ selon la première pente P1, le couple au clabot atteindra cette valeur cible avant que le déplacement du baladeur ne soit terminé. Dans ce cas, le couple au clabot augmentera de manière à devenir supérieur à la valeur de seuil $C_{S1}$ et l'effort au clabot s'opposera au déplacement du baladeur, ce qui peut engendrer l'échec de l'opération de dé-clabotage.

Afin de remédier à ce problème, le système de commande 11 comprend un module 16 de vérification de la position du baladeur et un module 17 de maintien de la consigne de couple moteur $C_{m\_cons}$ pour annuler le couple au clabot selon une deuxième pente P2 de gradient dynamique plus petit que le gradient dynamique de la première pente P1 jusqu'à ce que le baladeur soit en position neutre.

Ainsi, grâce aux deux phases d'annulation de couple au clabot de la présente invention, on peut assurer le dé-clabotage avec un niveau de robustesse élevé et ainsi éviter les éventuels échecs de dé-clabotage empêchant le changement de rapport de la transmission, et générant des perturbations importantes ressenties par le conducteur du véhicule.

Par exemple, dans le cas où la transmission comprend deux machines électriques, on pourrait prévoir de désengager les clabots d'un rapport thermique, c'est-à-dire en pilotant la machine électrique associée au moteur thermique, ou de désengager les clabots d'un rapport électrique c'est-à-dire en pilotant la machine électrique principale.

De manière générale, l'invention porte sur une transmission pour un véhicule automobile dépourvue d'embrayage et comportant un moteur thermique, au moins une machine électrique et au moins un système d'accouplement comprenant d'une part des clabots solidaires d'un pignon fou porté à rotation libre sur un arbre d'entrainement des roues du véhicule et d'autre part des clabots solidaires d'un baladeur solidaire en rotation d'un arbre moteur relié directement ou indirectement via un pignon fixe à l'arbre du moteur thermique ou à l'arbre de la machine électrique.

La figure 3 représente un organigramme d'un procédé 50 de commande des actionneurs de boite de la transmission 1 de la figure 1.

Lors d'une première étape 51, on calcule une consigne de couple moteur $C_{m\_cons}$ pour annuler le couple au clabot en appliquant le principe fondamental de la dynamique sur le système « clabot » :

$$C_{m\_cons} = C_{c\_cible} + I_m.r^2\dot{\omega}_r \qquad\qquad Eq.1$$

Avec :

$C_{m\_cons}$ , la consigne de couple moteur ;
$I_m$, l'inertie radiale du rotor du moteur ;
r, le rapport de réduction entre le régime moteur et le régime des roues ; et
$\dot{\omega}_r$, la dérivée temporelle du régime pour estimer la composante inertielle de l'effort au clabot.
$C_{c\_cible}$ , une valeur cible de couple au clabot ; cette valeur cible de couple au clabot est calculée de manière à obtenir une valeur de couple au clabot $C_c$ inférieure à une valeur de seuil $C_{S1}$ à partir de laquelle on peut se permettre de désengager ledit clabot. Cette valeur cible de couple au clabot est par la suite exprimée au moteur au travers des rapports de réduction.

Lors d'une deuxième étape 52, on transmet au moteur la consigne de couple moteur $C_{m\_cons}$ calculée au moteur pour annuler le couple au clabot.

Ainsi, le moteur est commandé pour réduire le niveau de couple qu'il fournit jusqu'à atteindre la valeur de seuil $C_{S1}$ en suivant un profil de type à décroissance linéaire, selon une première pente P1 illustrée sur la figure 2.

On compare à l'étape 53, le couple au clabot $C_c$ avec la valeur de seuil $C_{S1}$ afin de vérifier si le couple au clabot $C_c$ est inférieur ou égal à la valeur de seuil $C_{S1}$.

Lorsque le couple au clabot $C_c$ est inférieur ou égal à la valeur de seuil $C_{S1}$, on commande, à l'étape 54, l'actionneur de boite en envoyant une consigne de position $P_{\_cons}$ pour déclencher le déplacement du baladeur afin de désengager le clabot en question en le faisant déplacer vers une position Neutre.

Ainsi, l'opération de dé-clabotage s'effectue en deux étapes, à savoir une première étape consistant à annuler la somme des couples au clabot à travers le calcul d'une consigne de couple envoyée au moteur en appliquant le principe fondamental de la dynamique et une deuxième étape consistant à commander le déplacement de l'actionneur de boite à l'aide d'une consigne de position permettant de désengager le clabot en question en le déplaçant vers la position Neutre, une fois que le couple au clabot est inférieur ou égal à la valeur de seuil, c'est-à-dire une fois que la première étape est terminée.

Toutefois, l'actionneur de boite a besoin d'un certain temps pour réaliser le déplacement du baladeur et désengager le clabot. Il existe un risque que le couple au clabot traverse la fenêtre de dé-clabotage en un temps inférieur au temps T nécessaire au déplacement du baladeur. En d'autres termes, si on continue à faire converger le couple au clabot $C_c$ vers la valeur cible de couple au clabot $C_{c\_cible}$ selon la première pente P1, le couple au clabot atteindra cette valeur cible avant que le déplacement du baladeur ne soit terminé. Dans ce cas, le couple au clabot augmentera de manière à devenir supérieur à la valeur de seuil $C_{S1}$ et l'effort au clabot s'opposera au déplacement du baladeur, ce qui peut engendrer l'échec de l'opération de dé-clabotage.

Afin de remédier à ce problème, on vérifie la position du baladeur, à l'étape 54 et on maintient, à l'étape 55, la consigne de couple moteur $C_{m\_cons}$ pour annuler le couple au clabot selon une deuxième pente P2 de gradient dynamique plus petit que le gradient dynamique de la première pente P1 jusqu'à ce que le baladeur soit en position neutre.

La présente invention est applicable à toute transmission dépourvue d'embrayage comprenant au moins un clabot solidaire d'un pignon fou d'un arbre d'entrainement de roues motrices, au moins un clabot solidaire d'un baladeur d'un arbre moteur et un actionneur de boite configuré pour déplacer ledit baladeur selon l'axe longitudinal de l'arbre d'entrainement.

Grace à l'invention, on peut assurer le dé-clabotage avec un niveau de robustesse élevé et ainsi éviter les éventuels échecs de dé-clabotage empêchant le changement de rapport de la transmission, et générant des perturbations importantes ressenties par le conducteur du véhicule. De plus, l'invention permet le désengagement d'un pignon uniquement à partir d'un pilotage d'un actionneur de boite.

## Revendications

1. Procédé de commande d'au moins un actionneur de boite (8) d'une transmission (1) pour véhicule automobile à propulsion hybride comprenant un moteur thermique et au moins une machine électrique, ladite transmission (1) comprenant un arbre moteur (2) relié directement ou indirectement au moteur thermique et/ou à la machine électrique, un arbre d'entrainement (3) relié aux roues motrices du véhicule automobile, et au moins un système d'accouplement comprenant d'une part des clabots (5) solidaires d'un pignon fou (4) porté à rotation libre sur l'arbre d'entrainement (3) et d'autre part des clabots (6) solidaires d'un baladeur (7) solidaire en rotation de l'arbre moteur (2), le baladeur (7) étant configuré pour être déplacé longitudinalement selon l'axe de l'arbre d'entrainement (3) par l'actionneur de boite (8) afin d'engager ou désengager les clabots (5, 6), **caractérisé en ce que** pour désengager les clabots (5, 6) :

   - on calcule une consigne de couple moteur ($C_{m\_cons}$) pour annuler le couple au clabot ($C_c$) en appliquant le principe fondamental de la dynamique sur les clabots (6) à désengager ;
   - on transmet au moteur ladite consigne de couple moteur ($C_{m\_cons}$) calculée jusqu'à ce que le couple au clabot atteigne une valeur de seuil ($C_{S1}$) en suivant une première pente (P1) à décroissance linéaire,
   - on compare le couple au clabot ($C_c$) avec la valeur de seuil ($C_{S1}$) ; et
   - lorsque le couple au clabot ($C_c$) est inférieur ou égal à la valeur de seuil ($C_{S1}$), on commande l'actionneur de boite (8) en envoyant une consigne de position ($P_{\_cons}$) pour déclencher le déplacement du baladeur (7) afin de désengager les clabots (6) en question en le faisant déplacer vers une position neutre.

2. Procédé selon la revendication 1, dans lequel on vérifie la position du baladeur (7) et on maintient la transmission de la consigne de couple moteur ($C_{m\_cons}$) pour annuler le couple au clabot selon une deuxième pente (P2) de gradient dynamique plus petit que le gradient dynamique de la première pente (P1) jusqu'à ce que le baladeur (7) soit en position neutre.

3. Procédé selon la revendication 1 ou 2, dans lequel la consigne de couple moteur ($C_{m\_cons}$) pour annuler le couple au clabot est calculée en fonction d'une valeur cible de couple au clabot ($C_{c\_cible}$) calculée de manière à obtenir une valeur de couple au clabot ($C_c$) inférieure ou égale à la valeur de seuil ($C_{S1}$).

4. Procédé selon l'une quelconque des revendications précédentes, dans lequel on définit une valeur cible de couple au clabot ($C_{c\_cible}$,) inférieure à une valeur cible réelle ($C_{c\_cible\_réelle}$) pour s'assurer que le couple au clabot ($C_c$) converge vers la valeur de seuil ($C_{S1}$).

5. Transmission (1) pour véhicule automobile à propulsion hybride comprenant un moteur thermique et au moins une machine électrique, ladite transmission (1) comprenant un arbre moteur (2) relié, directement ou indirectement, au moteur thermique et/ou à la machine électrique, un arbre d'entrainement (3) relié aux roues motrices du véhicule automobile, et au moins un système d'accouplement comprenant d'une part des clabots (5) solidaires d'un pignon fou (4) porté à rotation libre sur l'arbre d'entrainement (3) et d'autre part des clabots (6) solidaires d'un baladeur (7) solidaire en rotation de l'arbre moteur (2), le baladeur (7) étant configuré pour être déplacé longitudinalement selon l'axe de l'arbre d'entrainement (3) par l'actionneur de boite (8) afin d'engager ou désengager les clabots (5, 6), **caractérisé en ce qu'**elle comprend une unité électronique de commande (10) comprenant un système de commande (11) comportant :

   - un module (12) de calcul d'une consigne de couple moteur ($C_{m\_cons}$) pour annuler le couple au clabot ($C_c$) en appliquant le principe fondamental de la dynamique sur les clabots (6) à désengager ;
   - un module (13) de transmission au moteur ladite consigne de couple moteur ($C_{m\_cons}$) calculée jusqu'à ce que le couple au clabot atteigne une valeur de seuil ($C_{S1}$) en suivant une première pente (P1) à décroissance linéaire,
   - un module (14) de comparaison du couple au clabot ($C_c$) avec la valeur de seuil ($C_{S1}$) ; et
   - module (15) de commande de l'actionneur de boite (8) en envoyant une consigne de position ($P_{\_cons}$) au baladeur (7) permettant de désengager les clabots (6) en question en le faisant déplacer vers une position neutre, lorsque le couple au clabot ($C_c$) est inférieur ou égal à la valeur de seuil ($C_{S1}$).

6. Transmission (1) selon la revendication 5, dans laquelle le système de commande (11) comprend un module (16) de vérification de la position du baladeur et un module (17) de maintien de la consigne de couple moteur ($C_{m\_cons}$) pour annuler le couple au clabot selon une deuxième pente (P2) de gradient dynamique plus petit que le gradient dynamique de la première pente (P1) jusqu'à ce que le baladeur (7) soit en position neutre.

7. Véhicule automobile à propulsion hybride comprenant une transmission selon l'une des revendications 5 ou 6.

**Patentansprüche**

1. Verfahren zur Steuerung mindestens eines Schaltaktuators (8) eines Getriebes (1) für ein Kraftfahrzeug mit Hybridantrieb, das einen Verbrennungsmotor und mindestens eine elektrische Maschine beinhaltet, wobei das Getriebe (1) eine Motorwelle (2), die direkt oder indirekt mit dem Verbrennungsmotor und/oder der elektrischen Maschine verbunden ist, eine Antriebswelle (3), die mit den Antriebsrädern des Kraftfahrzeugs verbunden ist, und mindestens ein Kupplungssystem beinhaltet, welches einerseits Klauen (5), die mit einem Losrad (4), das frei drehend auf der Antriebswelle (3) getragen wird, fest verbunden sind, und andererseits Klauen (6), die mit einer Schaltmuffe (7), die drehfest mit der Motorwelle (2) verbunden ist, fest verbunden sind, beinhaltet, wobei die Schaltmuffe (7) dazu konfiguriert ist, durch den Schaltaktuator (8) in Längsrichtung entlang der Achse der Antriebswelle (3) verschoben zu werden, um die Klauen (5, 6) einzurücken oder auszurücken, **dadurch gekennzeichnet, dass** zum Ausrücken der Klauen (5, 6):

   - ein Motordrehmomentsollwert ($C_{m\_soll}$) zum Aufheben des Klauendrehmoments ($C_c$) berechnet wird, indem das fundamentale Grundgesetz der Dynamik auf die auszurückenden Klauen (6) angewendet wird;
   - der berechnete Motordrehmomentsollwert ($C_{m\_soll}$) an den Motor übertragen wird, bis das Klauendrehmoment einen Schwellenwert ($C_{S1}$) erreicht, indem eine erste linear abnehmende Steigung (P1) verfolgt wird,
   - das Klauendrehmoment ($C_c$) mit dem Schwellenwert ($C_{S1}$) verglichen wird; und

- wenn das Klauendrehmoment ($C_c$) kleiner als oder gleich dem Schwellenwert ($C_{S1}$) ist, der Schaltaktuator (8) durch die Übermittlung eines Positionssollwerts ($P_{soll}$) zum Auslösen der Verschiebung der Schaltmuffe (7) gesteuert wird, um durch ihre Verschiebung in eine neutrale Position die betreffenden Klauen (6) auszurücken.

2. Verfahren nach Anspruch 1, wobei die Position der Schaltmuffe (7) überprüft wird und die Übertragung des Motordrehmomentsollwerts ($C_{m\_soll}$) zum Aufheben des Klauendrehmoments gemäß einer zweiten Steigung (P2) mit einem dynamischem Gradienten, der kleiner als der dynamische Gradient der ersten Steigung (P1) ist, beibehalten wird, bis sich die Schaltmuffe (7) in der neutralen Position befindet.

3. Verfahren nach Anspruch 1 oder 2, wobei der Motordrehmomentsollwert ($C_{m\_soll}$) zum Aufheben des Klauendrehmoments in Abhängigkeit von einem Zielwert des Klauendrehmoments ($C_{c\_ziel}$) berechnet wird, welcher so berechnet wird, dass ein Klauendrehmomentwert ($C_c$) erhalten wird, der kleiner als oder gleich dem Schwellenwert ($C_{S1}$) ist.

4. Verfahren nach einem der vorhergehenden Ansprüche, wobei ein Klauendrehmomentzielwert ($C_{c\_ziel}$) definiert wird, der kleiner als ein effektiver Zielwert ($C_{c\_ziel\_effektiv}$) ist, um sicherzustellen, dass das Klauendrehmoment ($C_c$) zu dem Schwellenwert ($C_{S1}$) hin konvergiert.

5. Getriebe (1) für ein Kraftfahrzeug mit Hybridantrieb, das einen Verbrennungsmotor und mindestens eine elektrische Maschine beinhaltet, wobei das Getriebe (1) eine Motorwelle (2), die direkt oder indirekt mit dem Verbrennungsmotor und/oder der elektrischen Maschine verbunden ist, eine Antriebswelle (3), die mit den Antriebsrädern des Kraftfahrzeugs verbunden ist, und mindestens ein Kupplungssystem beinhaltet, welches einerseits Klauen (5), die mit einem Losrad (4), das frei drehend auf der Antriebswelle (3) getragen wird, fest verbunden sind, und andererseits Klauen (6), die mit einer Schaltmuffe (7), die drehfest mit der Motorwelle (2) verbunden ist, fest verbunden sind, beinhaltet, wobei die Schaltmuffe (7) dazu konfiguriert ist, durch den Schaltaktuator (8) in Längsrichtung entlang der Achse der Antriebswelle (3) verschoben zu werden, um die Klauen (5, 6) einzurücken oder auszurücken, **dadurch gekennzeichnet, dass** es eine elektronische Steuereinheit (10) beinhaltet, die ein Steuersystem (11) beinhaltet, das Folgendes umfasst:

- ein Modul (12) zum Berechnen eines Motordrehmomentsollwerts ($C_{m\_soll}$) zum Aufheben des Klauendrehmoments ($C_c$), indem das fundamentale Grundgesetz der Dynamik auf die auszurückenden Klauen (6) angewendet wird;
- ein Modul (13) zum Übertragen des berechneten Motordrehmomentsollwerts ($C_{m\_soll}$) an den Motor, bis das Klauendrehmoment einen Schwellenwert ($C_{S1}$) erreicht, indem eine erste linear abnehmende Steigung (P1) verfolgt wird,
- ein Modul (14) zum Vergleichen des Klauendrehmoments ($C_c$) mit dem Schwellenwert ($C_{S1}$) ; und
- ein Modul (15) zur Steuerung des Schaltaktuators (8) durch die Übermittlung eines Positionssollwerts ($P_{soll}$) an die Schaltmuffe (7), der es gestattet, durch ihre Verschiebung in eine neutrale Position die betreffenden Klauen (6) auszurücken, wenn das Klauendrehmoment ($C_c$) kleiner als oder gleich dem Schwellenwert ($C_{S1}$) ist.

6. Getriebe (1) nach Anspruch 5, wobei das Steuersystem (11) ein Modul (16) zum Überprüfen der Position der Schaltmuffe und ein Modul (17) zur Beibehaltung des Motordrehmomentsollwerts ($C_{m\_soll}$) zum Aufheben des Klauendrehmoments gemäß einer zweiten Steigung (P2) mit einem dynamischem Gradienten, der kleiner als der dynamische Gradient der ersten Steigung (P1) ist, bis sich die Schaltmuffe (7) in der neutralen Position befindet, beinhaltet.

7. Kraftfahrzeug mit Hybridantrieb, das ein Getriebe nach einem der Ansprüche 5 oder 6 beinhaltet.

**Claims**

1. Method for controlling at least one gearbox actuator (8) of a transmission (1) for a hybrid-propulsion motor vehicle comprising a combustion engine and at least one electric machine, said transmission (1) comprising a motor shaft (2) connected directly or indirectly to the combustion engine and/or to the electric machine, a driveshaft (3) connected to the driven wheels of the motor vehicle, and at least one coupling system comprising, on the one hand, coupling dogs (5) secured to an idling pinion (4) borne with the ability to rotate freely on the driveshaft (3) and, on the other hand, coupling dogs (6) secured to a slider (7) that rotates as one with the motor shaft (2), the slider (7) being configured to be moved longitudinally along the axis of the driveshaft (3) by the gearbox actuator (8) so as to engage or disengage the coupling dogs (5, 6), **characterized in that** in order to disengage the coupling dogs (5, 6):

- a motor torque setpoint ($C_{m\_sp}$) for cancelling the torque at the coupling dog ($C_c$) is calculated by applying the fundamental principle of dynamics to the coupling dogs (6) that are to be disengaged;
- said calculated motor torque setpoint ($C_{m\_sp}$) is transmitted to the motor until such point as the torque at the coupling dog reaches a threshold value ($C_{s1}$), following a first slope (P1) with a linear decrease,
- the torque at the coupling dog ($C_c$) is compared with the threshold value ($C_{s1}$); and
- when the torque at the coupling dog ($C_c$) is less than or equal to the threshold value ($C_{s1}$) the gearbox actuator (8) is operated by sending a position setpoint ($P_{\_sp}$) to trigger the moving of the slider (7) so as to disengage the coupling dogs (6) in question by causing it to move toward a neutral position.

2. Method according to Claim 1, wherein the position of the slider (7) is verified and the transmission of the motor torque setpoint ($C_{m\_sp}$) is maintained in order to cancel the torque at the coupling dog with a second slope (P2) of dynamic gradient that is smaller than the dynamic gradient of the first slope (P1) until the slider (7) is in a neutral position.

3. Method according to Claim 1 or 2, wherein the motor torque setpoint ($C_{m\_sp}$) for cancelling the torque at the coupling dog is calculated as a function of a target value for torque at the coupling dog ($C_{c\_target}$) calculated in such a way as to obtain a value for torque at the coupling dog ($C_c$) that is less than or equal to the threshold value ($C_{s1}$).

4. Method according to any one of the preceding claims, wherein a target value for torque at the coupling dog ($C_{c\_target}$), lower than an actual target value ($C_{c\_target\_actual}$), is defined in order to ensure that the torque at the coupling dog ($C_c$) converges toward the threshold value ($C_{s1}$).

5. Transmission (1) for a hybrid-propulsion motor vehicle comprising a combustion engine and at least one electric machine, said transmission (1) comprising a motor shaft (2) connected directly or indirectly to the combustion engine and/or to the electric machine, a driveshaft (3) connected to the driven wheels of the motor vehicle, and at least one coupling system comprising, on the one hand, coupling dogs (5) secured to an idling pinion (4) borne with the ability to rotate freely on the driveshaft (3) and, on the other hand, coupling dogs (6) secured to a slider (7) that rotates as one with the motor shaft (2), the slider (7) being configured to be moved longitudinally along the axis of the driveshaft (3) by the gearbox actuator (8) so as to engage or disengage the coupling dogs (5, 6), **characterized in that** it comprises an electronic control unit (10) comprising a control system (11) comprising:

- a module (12) for calculating a motor torque setpoint ($C_{m\_sp}$) for cancelling the torque at the coupling dog ($C_c$) by applying the fundamental principle of dynamics to the coupling dogs (6) that are to be disengaged;
- a module (13) for transmitting said calculated motor torque setpoint ($C_{m\_sp}$) to the motor until such point as the torque at the coupling dog reaches a threshold value ($C_{s1}$), following a first slope (P1) with a linear decrease,
- a module (14) for comparing the torque at the coupling dog ($C_c$) with the threshold value ($C_{s1}$); and
- a control module (15) for controlling the gearbox actuator (8) by sending a position setpoint ($P_{\_sp}$) to the slider (7) allowing the coupling dogs (6) in question to be disengaged by making it move toward a neutral position when the torque at the coupling dog ($C_c$) is less than or equal to the threshold value ($C_{s1}$).

6. Transmission (1) according to Claim 5, wherein the control system (11) comprises a module (16) for verifying the position of the slider and a module (17) for maintaining the motor torque setpoint ($C_{m\_sp}$) in order to cancel the torque at the coupling dog with a second slope (P2) of dynamic gradient that is smaller than the dynamic gradient of the first slope (PI) until the slider (7) is in a neutral position.

7. Motor vehicle with hybrid propulsion comprising a transmission according to one of Claims 5 and 6.

# FIG.1

## FIG.2

## FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012131259 A1
- EP 2726757 B1
- US 2006047395 A
- FR 3048047
- US 6371879 B1
- US 5456647 A